# EUROPÄISCHE PATENTSCHRIFT

(11) **EP 4 421 008 B1**
(45) Veröffentlichungstag und Bekanntmachung des Hinweises auf die Patenterteilung: **27.08.2025**
(21) Anmeldenummer: 23305241.4
(22) Anmeldetag: 23.02.2023
(51) Int. Cl.: B65G 54/02

(54) **TRANSPORTSYSTEM UND VERFAHREN ZUM BETREIBEN EINES TRANSPORTSYSTEMS**
TRANSPORT SYSTEM AND METHOD FOR OPERATING A TRANSPORT SYSTEM
SYSTÈME DE TRANSPORT ET PROCÉDÉ DE FONCTIONNEMENT D'UN SYSTÈME DE TRANSPORT

(43) Veröffentlichungstag der Anmeldung: 28.08.2024
(73) Patentinhaber: SCHNEIDER ELECTRIC INDUSTRIES SAS, 92500 Rueil-Malmaison (FR)
(72) Erfinder: Reiner, Volk, 97264 Helmstadt (DE)
(74) Vertreter: Manitz Finsterwald Patent- und Rechtsanwaltspartnerschaft mbB

(56) Entgegenhaltungen:
- DE-A1- 102015 104 023
- US-A1- 2017 050 332
- US-A1- 2021 101 761
- US-B2- 10 273 094

## Beschreibung

Die Erfindung betrifft ein Transportsystem, insbesondere ein Multi-Carrier-System, sowie ein Verfahren zum Betreiben eines solchen Transportsystems.

Derartige Transportsysteme weisen mehrere auch als Segmente bezeichnete Linearmotoren auf, die aneinandergereiht angeordnet sind und eine Strecke zum Bewegen von Transporteinheiten oder -elementen entlang der Strecke definieren. Üblicherweise setzen sich die Strecken aus geraden Abschnitten und gekrümmten Abschnitten zusammen, die auch als Kurvenabschnitte bezeichnet werden können. Wenn die Transporteinheiten entlang der Strecke bewegt werden, erfahren diese am Kurvenübergang von einem geraden Abschnitt in einen Kurvenabschnitt oder umgekehrt eine sprunghafte Änderung der Zentrifugalbeschleunigung. Dies bedeutet am Kurvenübergang einen auf die jeweilige Transporteinheit wirkenden großen Ruck, welcher der zeitlichen Ableitung der Beschleunigung entspricht. Dieser Ruck kann dazu führen, dass durch die Transporteinheit transportiertes Transportgut verloren geht oder beschädigt wird.

Um derartiges zu vermeiden, ist es gewünscht, den Ruck zu verringern. Zum Reduzieren des Rucks ist es etwa bekannt, zwischen den geraden Segmenten und den Kurvensegmenten zusätzliche Übergangssegmente anzuordnen, die den Streckenverlauf und insbesondere den Kurvenübergang so umgestalten, dass der Ruck reduziert wird. Weiterhin ist es bekannt, die Geschwindigkeit der Transporteinheiten kurz vor dem Kurvenübergang zu reduzieren. Diese Lösungen sind also aufwändig, beeinflussen den Streckenablauf oder wirken sich durch das Abbremsen der Transporteinheiten negativ auf die Leistungsfähigkeit des Transportsystems aus.

Aus der Druckschrift DE 10 2015 104 023 A1 ist eine Transportvorrichtung bekannt, mittels der Mover zum Transportieren von Objekten entlang einer Strecke bewegbar sind. Die Mover weisen einen Läufer und einen Träger auf. Der Träger ist vertikal relativ zu dem Läufer zwischen zwei Stellungen verstellbar, wobei die Verstellung dadurch erfolgt, dass der Träger durch an der Strecke vorgesehene Rampen ausgelenkt wird. Das Verstellen dient dem Zweck, das Auflegen oder Abnehmen von Objekten oder Produkten von dem Träger zu erleichtern.

Es ist eine Aufgabe der vorliegenden Erfindung, ein Transportsystem sowie ein Verfahren zum Betreiben eines solchen Transportsystems vorzuschlagen, bei denen der Ruck bei verringertem Aufwand und verbesserter Leistungsfähigkeit des Transportsystems reduziert werden kann.

Diese Aufgabe wird durch den Gegenstand der unabhängigen Ansprüche gelöst. Vorteilhafte Ausgestaltungen sind Gegenstand der Unteransprüche und ergeben sich aus der Beschreibung und den Zeichnungen.

Das erfindungsgemäße Transportsystem ist insbesondere ein Multi-Carrier-System und umfasst mehrere Linearmotoren, die aneinandergereiht angeordnet sind und eine erste Strecke sowie eine sich von der ersten Strecke zumindest teilweise unterscheidende zweite Strecke definieren, und zumindest eine Transporteinheit. Die Transporteinheit weist ein Transportelement, welches durch die Linearmotoren in einer Bewegungsrichtung entlang der ersten Strecke bewegbar ist, und ein Aufnahmeelement zum Aufnehmen eines zu transportierenden Transportguts auf. Das Aufnahmeelement ist ausgebildet, mit dem Transportelement in der Bewegungsrichtung mitbewegt und zum Einstellen eines Abstands zwischen dem Transportelement und dem Aufnahmeelement in einer Querrichtung, die sich quer zu der Bewegungsrichtung erstreckt, relativ zu dem Transportelement bewegt zu werden. Zudem umfasst das Transportsystem eine Abstandseinheit zum Einstellen des Abstands in der Querrichtung zwischen dem Transportelement und dem Aufnahmeelement während der Bewegung des Transportelements, sodass das Aufnahmeelement entlang und/oder entsprechend der zweiten Strecke bewegt wird.

Dass sich die erste Strecke und die zweite Strecke zumindest teilweise unterscheiden, bedeutet dabei nicht nur, dass es sich physikalisch um zwei unterschiedliche Strecken handelt, sondern auch, dass sie sich hinsichtlich ihres Verlaufs zumindest teilweise unterscheiden, also zumindest teilweise einen unterschiedlichen Verlauf aufweisen. Mit anderen Worten sind die erste Strecke und die zweite Strecke, wenn man sie beispielsweise übereinanderlegen würde, zumindest nicht über ihren gesamten Verlauf deckungsgleich.

Die Bewegungsrichtung und die Querrichtung beziehen sich auf ein mitbewegtes Koordinatensystem des Transportelements. Die Querrichtung bezeichnet hier eine Richtung quer, also orthogonal, zur Bewegungsrichtung. Bei der Querrichtung handelt es sich um die Richtung, in welcher die Zentrifugalkraft wirkt, die das Transportelement in den gekrümmten Streckenabschnitten erfährt. Die Bewegungsrichtung kann auch als x-Richtung bezeichnet werden, und die Querrichtung kann auch als y-Richtung bezeichnet werden. Eine in dem mitbewegten Koordinatensystem dritte z-Richtung erstreckt sich orthogonal zu der x-Richtung und zu der y-Richtung. Insbesondere kann die z-Richtung bei horizontaler Bewegung des Transportelements der vertikalen Richtung entsprechen.

Dass das Aufnahmeelement ausgebildet ist, in der Querrichtung relativ zu dem Transportelement bewegt zu werden, bedeutet, dass die Bewegung des Aufnahmeelement relativ zu dem Transportelement zumindest eine Bewegungskomponente in der Querrichtung aufweist. Es ist nicht erforderlich, dass die Bewegung exakt und ausschließlich in der Querrichtung erfolgt.

Indem während der Bewegung des Transportelements entlang der ersten Strecke der Abstand in der Querrichtung zwischen dem Transportelement und dem Aufnahmeelement eingestellt werden kann, ist folglich auch der Abstand in der Querrichtung zwischen dem Aufnahmeelement und der ersten Strecke veränderlich.

Durch die Abstandseinheit ist es möglich, den Abstand so einzustellen, dass das Aufnahmeelement, an dem das Transportgut angeordnet ist, der zweiten Strecke folgt, während es mit dem entlang der ersten Strecke angetriebenen Transportelement mitbewegt wird.

Dies ermöglicht es beispielsweise, die zweite Strecke insbesondere an den Übergängen zwischen Kurvenabschnitten und gerade Abschnitten ruckoptimiert auszugestalten, sodass der auf das Aufnahmeelement wirkende Ruck an diesen Kurvenübergängen deutlich reduziert wird. Als "Ruck" wird dabei die zeitliche Änderungsrate oder zeitliche Ableitung der Beschleunigung bezeichnet. Dadurch wird verhindert, dass Transportgut verloren geht oder beschädigt wird. Gleichzeitig kann etwa auf eine Umgestaltung der ersten Strecke oder eine Reduktion der Geschwindigkeit der Transporteinheiten vor Kurvenübergängen verzichtet werden, sodass die erfindungsgemäße Lösung einen vergleichsweise geringen Aufwand mit sich bringt und sich zudem nicht negativ auf die Leistungsfähigkeit des Transportsystems auswirkt.

Jeder Linearmotor kann insbesondere sechs Außenflächen aufweisen, nämlich Oberseite, Unterseite, Außenseite, Innenseite und zwei Seitenflächen. Dabei sind die Seitenflächen von benachbarten Linearmotoren durch einen geringen Dehnungsspalt von etwa 0,1 mm bis 0,2 mm zueinander beabstandet oder liegen direkt aneinander an. An der Außenseite kann die Führungsbahn für die Transportelemente ausgebildet sein. Die Innenseite ist im Bereich eines Innenraums des Transportsystems angeordnet.

Das Transportsystem bzw. das Multi-Carrier-System kann umlaufend ausgebildet sein, sodass die Linearmotoren in sich geschlossene Strecken bilden, entlang denen die Transporteinheit oder die Transporteinheiten theoretisch endlos in derselben Richtung bewegt werden können. Allerdings ist es auch möglich, dass die Linearmotoren offene Strecken mit einem Startpunkt und einem Endpunkt bilden.

Die Transportelemente werden insbesondere magnetisch angetrieben. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente in der Bewegungsrichtung entlang der ersten Strecke. Insbesondere können die Transportelemente unabhängig und separat voneinander bewegt werden. Mittels der Aufnahmeelemente kann so Transportgut, etwa Werkstücke oder Produkte, mit der jeweiligen Transporteinheit transportiert werden.

Das Transportelement kann auch als Carrier, Mover oder Läufer, der Linearmotor hingegen auch als Stator bezeichnet werden.

Die erste Strecke weist gerade Streckenabschnitte und gekrümmte Streckenabschnitte auf. Die zweite Strecke weist zumindest gekrümmte Streckenabschnitte auf, kann aber auch gerade Streckenabschnitte aufweisen. Die gekrümmten Streckenabschnitte können auch als Kurvenabschnitte bezeichnet werden. Die erste Strecke ist stets durchgehend ausgestaltet, um die Bewegung der Transportelemente zu bewerkstelligen. Die zweite Strecke kann grundsätzlich ebenfalls durchgehend ausgestaltet sein, allerdings ist es auch denkbar, dass die zweite Strecke gegebenenfalls mehrfach unterbrochen ist. So ist etwa denkbar, dass die zweite Strecke nur an den Abschnitten vorhanden ist, an denen das Aufnahmeelement eine von der ersten Strecke abweichende Bewegung umsetzen soll. Insbesondere kann dies an Kurven und/oder Kurvenübergängen der Fall sein.

Gerade Streckenabschnitte der ersten Strecke können parallel zu geraden Streckenabschnitten der zweiten Strecke verlaufen. Dies bewirkt, dass der Abstand zwischen dem Transportelement und dem Aufnahmeelement in der Querrichtung nicht verändert wird, solange die Transporteinheit entlang den geraden Abschnitten bewegt wird. Insbesondere können die geraden Streckenabschnitte vertikal und/oder horizontal zueinander versetzt angeordnet sein.

Vorzugsweise weist die zweite Strecke zumindest einen Kurvenabschnitt auf, der einer Klothoide folgt. Eine Klothoide bezeichnet eine Kurvenform, bei der die Krümmung an jeder Stelle der Kurve proportional zur Länge ihres Bogens bis zu der Stelle ist. Somit nimmt ihre Krümmung linear zu. Dadurch ergibt sich ein allmählicher Anstieg der Zentrifugalbeschleunigung anstelle eines sprunghaften Anstiegs. Der Ruck am Kurvenübergang wird dadurch deutlich verringert.

Allgemein kann die zweite Strecke zumindest einen Kurvenabschnitt aufweisen, welcher direkt auf eine Gerade Strecke folgt, welcher eine geringere Krümmung aufweist als die erste Strecke (beispielsweise in der Draufsicht auf das Transportsystem), sodass der Ruck, welcher durch die zweite Strecke verursacht wird, kleiner als ein Ruck ist, der durch die erste Strecke (und die stärkere Krümmung) verursacht würde.

In vorteilhafter Ausgestaltung sind die erste Strecke und die zweite Strecke zueinander versetzt. Insbesondere können die Strecken vertikal versetzt, also vertikal über- bzw. untereinander angeordnet sein. Dadurch können die beiden Strecken an den Linearmotoren angeordnet sein, ohne sich gegenseitig zu kreuzen und sodass die Transporteinheit entlang den Strecken bewegt werden kann.

Das Aufnahmeelement kann, insbesondere mittels eines Gleitlagers, quer zu der Bewegungsrichtung beweglich an dem Transportelement gelagert sein. Dadurch wird gewährleistet, dass das Aufnahmeelement zwar in der Bewegungsrichtung mit dem Transportelement mitbewegt wird, aber relativ zu diesem in der Querrichtung beweglich oder verschieblich ist. Durch die Ausführung mittels eines Gleitlagers können Reibungskräfte in der Querrichtung weitgehend eliminiert werden.

Gemäß einer Ausgestaltung weist die Abstandseinheit einen Abstandshalter auf, welcher einen ersten Kontaktabschnitt und einen zweiten Kontaktabschnitt aufweist. Der Abstandshalter kann beispielsweise ein Stößel sein. Zum Einstellen des Abstands ist der erste Kontaktabschnitt an dem Aufnahmeelement befestigt, und der zweite Kontaktabschnitt kontaktiert die zweite Strecke, insbesondere eine Kurvenscheibe der zweiten Strecke. Der Abstandshalter ist als starres Element ausgebildet, sodass zwischen dem Aufnahmeelement und der zweiten Strecke stets ein konstanter Abstand gehalten wird, während das Aufnahmeelement mit dem Transportelement mitbewegt wird. Da der zweite Kontaktabschnitt die zweite Strecke kontaktiert, läuft er entlang dieser mit. Dadurch wird bewirkt, dass das Aufnahmeelement der zweiten Strecke folgt.

Das Aufnahmeelement kann in Richtung zu der zweiten Strecke vorgespannt sein, insbesondere mittels einer Feder, sodass der Abstandshalter stets in Kontakt mit der zweiten Strecke bleibt. Alternativ kann der zweite Kontaktabschnitt an der zweiten Strecke in der Querrichtung unbeweglich geführt oder zwangsgeführt sein. Dies bedeutet, dass der zweite Kontaktabschnitt entlang der Erstreckungsrichtung der zweiten Strecke beweglich geführt ist, jedoch in der Querrichtung unbeweglich zur zweiten Strecke ist. Beispielsweise kann der zweite Kontaktabschnitt in eine mit der zweiten Strecke mitlaufende Nut eingreifen. So ist ebenfalls sichergestellt, dass der Abstand zwischen Aufnahmeelement und zweiter Strecke stets konstant gehalten wird.

Eine weitere mögliche Ausgestaltung sieht vor, dass die Abstandseinheit einen Motor aufweist, der ausgebildet ist, den Abstand in der Querrichtung zwischen dem Transportelement und dem Aufnahmeelement entsprechend der Position des Transportelements entlang der ersten Strecke einzustellen. Der Motor kann insbesondere dahingehend angesteuert werden, dass er den Abstand synchron zur Position des Transportelements entlang der ersten Strecke einstellt.

Das Aufnahmeelement kann in Richtung zu der zweiten Strecke vorgespannt sein, insbesondere mittels einer Feder. Das Auslenken des Aufnahmeelements in der Querrichtung kann in diesem Fall aufgrund der Zentrifugalkraft, die entgegen der Vorspannkraft wirkt, erfolgen. Einer Kurvenscheibe an der zweiten Strecke bedarf es dann nicht.

Die Erfindung betrifft außerdem ein Verfahren zum Betreiben des zuvor beschriebenen Transportsystems. Das Verfahren weist die folgenden Schritte auf:
- Ansteuern der Linearmotoren, um das Transportelement in der Bewegungsrichtung entlang der ersten Strecke zu bewegen,
- Einstellen des Abstands in der Querrichtung zwischen dem Transportelement und dem Aufnahmeelement während der Bewegung des Transportelements mittels der Abstandseinheit, sodass das Aufnahmeelement entlang und/oder entsprechend der zweiten Strecke bewegt wird.

Im Übrigen gelten zu dem erfindungsgemäßen Transportsystem die zum erfindungsgemäßen Verfahren getroffenen Aussagen entsprechend. Es versteht sich, dass sämtliche hierin genannten Merkmale und Ausgestaltungen miteinander kombiniert werden können, sofern nicht explizit anders angegeben.

Nachfolgend wird die Erfindung schematisch und beispielhaft unter Bezugnahme auf die Zeichnungen beschrieben. Darin zeigt:
- Fig. 1: eine perspektivische Ansicht eines als Multi-Carrier-System ausgebildeten Transportsystems gemäß einem Ausführungsbeispiel,
- Fig. 2: eine perspektivische Ansicht einer Transporteinheit,
- Fig. 3: eine schematische Ansicht von unten auf ein als Multi-Carrier-System ausgebildetes Transportsystem gemäß einem Ausführungsbeispiel,
- Fig. 4: eine Darstellung der auf das Transportelement und auf das Aufnahmeelement wirkenden Zentrifugalbeschleunigung während einer Kurvendurchfahrt und
- Fig. 5: eine Darstellung eines Kurvenübergangs der ersten Strecke und der zweiten Strecke gemäß einem Ausführungsbeispiel, bei dem der Kurvenabschnitt der zweiten Strecke einer Klothoide folgt.

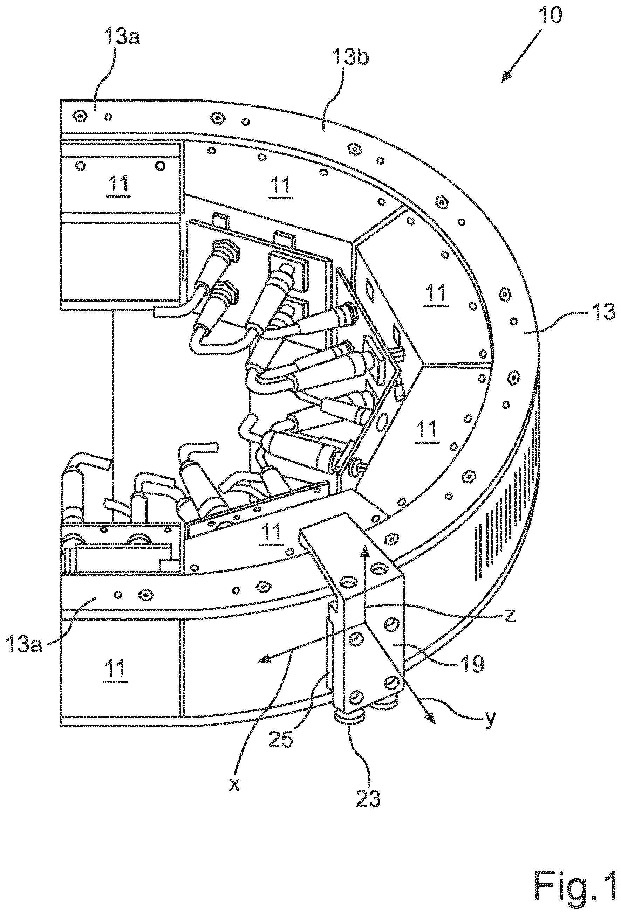

Fig. 1 zeigt schematisch einen Teil eines als Multi-Carrier-System ausgebildeten Transportsystems 10. Das Transportsystem 10 weist mehrere Linearmotoren 11 auf, die aneinandergereiht angeordnet sind und eine erste Strecke 13 definieren. Zudem zeigt Fig. 1, dass die erste Strecke 13 gerade Streckenabschnitte 13a und einen gekrümmten Streckenabschnitt 13b, der auch als Kurvenabschnitt 13b bezeichnet werden kann, aufweist. Die Linearmotoren 11 definieren außerdem eine sich von der ersten Strecke 13 zumindest teilweise unterscheidende zweite Strecke 15, die aber in Fig. 1 nicht sichtbar ist. Diese wird nachfolgend noch genauer erläutert.

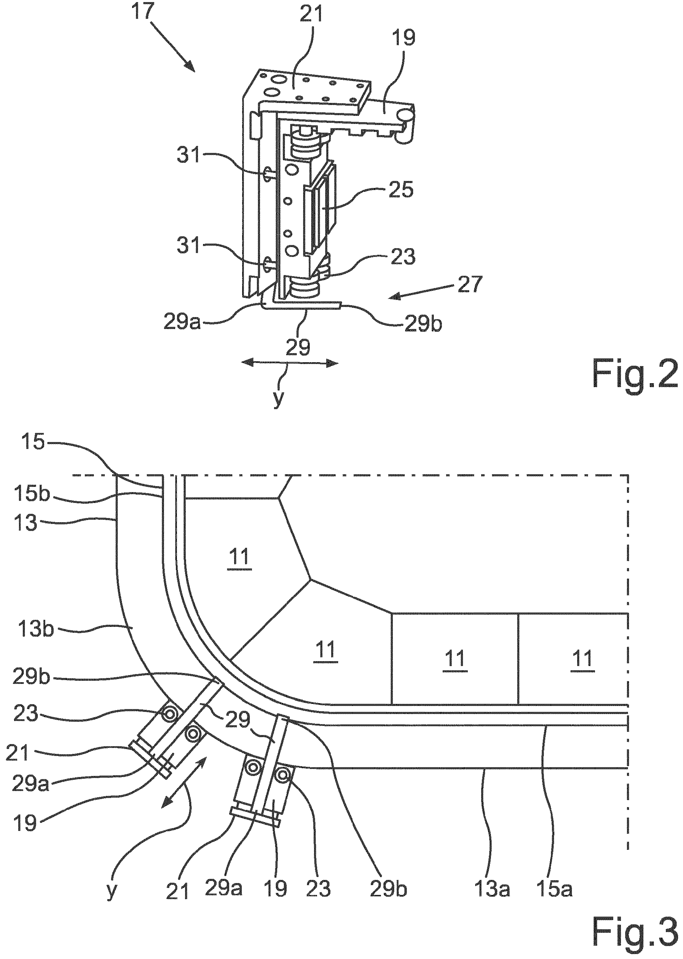

In Fig. 1 ist ferner ein Transportelement 19 gezeigt, welches durch die Linearmotoren 11 in einer Bewegungsrichtung x entlang der ersten Strecke 13 bewegbar ist. Das Transportelement 19 bildet zusammen mit einem Aufnahmeelement 21, das ist in Fig. 1 weggelassen wurde, eine in Fig. 2 gezeigte Transporteinheit 17, die nachfolgend noch genauer beschrieben wird. Das Transportelement 19 weist, um magnetisch angetrieben werden zu können, Permanentmagnete 25 auf, welche mittels eines sich verändernden und/oder wandernden Magnetfelds, das von den Linearmotoren 11 erzeugt wird, mit einer Antriebskraft beaufschlagt werden. Die Antriebskraft führt zu einer Bewegung der Transportelemente 19 in der Bewegungsrichtung x entlang der ersten Strecke 13. Dabei rollen an dem Transportelement 19 vorgesehene Rollen 23 an der ersten Strecke 13, insbesondere an einer Schiene der ersten Strecke 13, ab. Insbesondere können die Transportelemente 19 unabhängig und separat voneinander bewegt werden.

Wie bereits erwähnt, zeigt Fig. 2 ein Ausführungsbeispiel einer Transporteinheit 17 mit einem Transportelement 19 und einem Aufnahmeelement 21. Das Aufnahmeelement 21 kann in Fig. 2 nicht gezeigtes, zu transportierenden Transportgut, etwa Werkstücke oder Produkte, aufnehmen. Das Aufnahmeelement 21 ist zudem so an dem Transportelement 19 angebracht, dass es zwar bei einer Bewegung des Transportelements 19 in der Bewegungsrichtung x mit diesem mitbewegt wird, jedoch in einer Querrichtung y relativ zu dem Transportelement 19 beweglich ist. Diese Beweglichkeit ist bei dem vorliegenden Ausführungsbeispiel durch Gleitlager 31 gewährleistet. Die Querrichtung y erstreckt sich quer, also orthogonal, zu der Bewegungsrichtung und entspricht im vorliegenden Ausführungsbeispiel der Wirkungsrichtung der Zentrifugalbeschleunigung.

Fig. 2 zeigt außerdem eine Abstandseinheit 27, die in diesem Ausführungsbeispiel einen starren Abstandshalter 29 aufweist. Der Abstandshalter 29 ist als Stößel ausgebildet und weist einen an dem Aufnahmeelement 21 befestigten ersten Kontaktabschnitt 29a und einen zweiten Kontaktabschnitt 29b auf.

Fig. 3 zeigt eine Ansicht eines Transportsystems 10 von unten, bei der die zuvor beschriebene erste Strecke 13 zu sehen ist. An der ersten Strecke rollen die Rollen 23 des Transportelements 19 ab. Außerdem ist eine zweite Strecke 15 dargestellt, die durch eine Kurvenscheibe definiert ist, welche sich vertikal unterhalb der ersten Strecke 13 befindet. Die zweite Strecke 15 weist, wie die erste Strecke 13, gerade Streckenabschnitte 15a und gekrümmte Streckenabschnitte bzw. Kurvenabschnitte 15b auf. Jedoch ist auch denkbar, dass die zweite Strecke 15 Lücken aufweist und insbesondere nur an solchen Abschnitten vorhanden ist, an denen gewünscht ist, dass das Aufnahmeelement 21 einer von der ersten Strecke 13 abweichenden Streckenführung folgt. Dies kann insbesondere in Kurvenabschnitten oder im Bereich von Kurvenübergängen der Fall sein.

Wie Fig. 3 zeigt, kontaktiert der zweite Kontaktabschnitt 29b des Abstandshalters 29 die zweite Strecke 15 und tastet diese ab. Somit sorgt der Abstandhalter 29 dafür, dass ein bestimmter Abstand in der Querrichtung y zwischen der zweiten Strecke 15 und dem Aufnahmeelement 21 eingehalten wird, während das Aufnahmeelement 21 mit dem Transportelement 19 in der Bewegungsrichtung x mitbewegt wird. Gleichzeitig ist das Aufnahmeelement 21 mittels einer nicht gezeigten Feder in Richtung zu der zweiten Strecke 15 vorgespannt, damit der zweite Kontaktabschnitt 29b nicht den Kontakt zu der zweiten Strecke 15 verliert. Alternativ wäre auch denkbar, dass der zweite Kontaktabschnitt 29b an der zweiten Strecke 15 in der Querrichtung y unbeweglich geführt ist, indem er etwa in eine mit der zweiten Strecke 15 mitlaufende Nut eingreift, durch die er in der Querrichtung y zwangsgeführt ist.

Somit wird mittels der Abstandseinheit 27 der Abstand in der Querrichtung y zwischen dem Transportelement 19 und dem Aufnahmeelement 21 eingestellt, sodass das Transportelement 19 dem Verlauf der ersten Strecke 13 folgt und das Aufnahmeelement 21 mit diesem mitbewegt wird, dabei jedoch dem Verlauf der zweiten Strecke 15 folgt.

Grundsätzlich sind auch andere als die hier gezeigte Umsetzung der Abstandseinheit 27 denkbar. So kann die Abstandseinheit 27 etwa einen Motor aufweisen, der ausgebildet ist, den Abstand in der Querrichtung y zwischen dem Transportelement 19 und dem Aufnahmeelement 21 synchron zur Position des Transportelements 19 entlang der ersten Strecke 13 einzustellen. Das Aufnahmeelement 21 kann außerdem in Richtung zu der zweiten Strecke 15 vorgespannt sein und in der Querrichtung y aufgrund der Zentrifugalkraft entgegen der Vorspannkraft ausgelenkt werden.

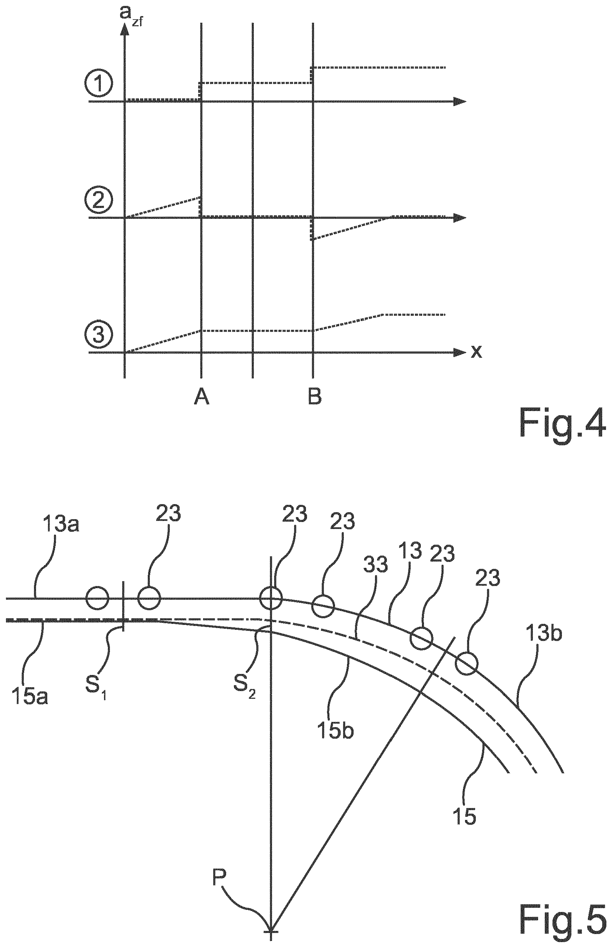

Fig. 5 zeigt beispielhaft die Verläufe einer ersten Strecke 13 und einer zweiten Strecke 15 im Bereich eines Kurvenabschnitts um einen Kurvenmittelpunkt P und im Bereich eines Kurvenübergangs. In diesem Beispiel folgt der gekrümmte Streckenabschnitt 15b der zweiten Strecke 15 einer Klothoide, sodass die Krümmung an jeder Stelle der Kurve proportional zur Länge ihres Bogens bis zu dieser Stelle ist, also linear zunimmt. Mit gestrichelter Linie ist außerdem eine virtuelle Vergleichsstrecke 33 gezeigt. Die virtuelle Vergleichsstrecke 33 entspricht der zweiten Strecke 15, wenn diese nicht eine Klothoide folgen würde, sondern entsprechend der ersten Strecke 13 weitergeführt wäre.

Wie der Vergleich der zweiten Strecke 15 und der virtuellen Vergleichsstrecke 33 zeigt, beginnt der gekrümmte Streckenabschnitt 15b der zweiten Strecke 15 bereits früher als die Krümmung der virtuellen Vergleichsstrecke 33, nämlich am Streckenpunkt S₁. Ein weiterer Streckenpunkt S₂ entspricht dem Punkt, an dem die Krümmung der virtuellen Vergleichsstrecke 33 beginnen würde. Dadurch nimmt die Krümmung des gekrümmten Streckenabschnitts 15b allmählich zu, was dazu führt, dass der Anstieg der auf das Aufnahmeelement 21 wirkenden Zentrifugalbeschleunigung auf einen größeren Teilabschnitt der Strecke 15 ausgedehnt werden kann und zu einem verringerten Ruck führt.

Anschaulich gezeigt ist dies auch in Fig. 4. Die darin gezeigten Verläufe zeigen die Zunahme der Zentrifugalbeschleunigung a_{Zf} über der Position entlang der Strecke in der Bewegungsrichtung x.

Zeile (1) beschreibt den Verlauf der Zentrifugalbeschleunigung a_{Zf} für das Transportelement 19. Position A entspricht einer Position, bei dem eine erste von zwei Rollen 23 des Transportelements 19 einen gekrümmten Streckenabschnitt 13b einer ersten Strecke 13 erreicht. An dieser Stelle steigt die Zentrifugalbeschleunigung a_{Zf} sprunghaft an, was einem unendlich großen Ruck (Zeitableitung der Zentrifugalbeschleunigung a_{Zf}) entspricht. An einer zweiten Position B erreicht die zweite Rolle 23 des Transportelements 19 den gekrümmten Streckenabschnitt 13b. An dieser Position erfährt das Transportelement 19 einen zweiten sprunghaften Anstieg der Zentrifugalbeschleunigung a_{Zf}.

Zeile (2) entspricht der zusätzlichen auf das Aufnahmeelement 21 und das Transportgut wirkenden Beschleunigung. Da die Krümmung der Klothoide früher beginnt, steigt die Zentrifugalbeschleunigung bereits vor Erreichen der Position A an. Aufgrund des allmählichen Anstiegs der Krümmung steigt die Zentrifugalbeschleunigung jedoch linear statt sprunghaft an. Zwischen den Positionen A und B ist die zusätzliche Beschleunigung gleich null, da das Aufnahmeelement 21 mit konstanter Geschwindigkeit weiter in Richtung Kreismitte bewegt wird. Die auf das Aufnahmeelement 21 und das Transportgut wirkende Zentrifugalbeschleunigung ist in diesem Bereich, wo sich eine Rolle 23 im geraden Streckenabschnitt 13a und die andere Rolle 23 im gekrümmten Streckenabschnitt 13b befindet, annähernd konstant. Nachdem an der Position B die zweite Rolle 23 des Transportelements 19 den gekrümmten Streckenabschnitt 13b erreicht hat, folgt das Transportelement 19 bereits einer stärkeren Krümmung als das Aufnahmeelement 21, welches der zweiten Strecke 15 folgt, sodass sich eine negative zusätzliche Beschleunigung des Aufnahmeelements 21 ergibt. Diese steigt aufgrund der weiterhin allmählich ansteigenden Krümmung der Klothoide linear an.

Zeile (3) entspricht der Summe aus (1) und (2), also der tatsächlich auf das Aufnahmeelement 21 und das Transportgut wirkenden Beschleunigung. Darin ist zu sehen, dass das Aufnahmeelement 21 und das Transportgut keine sprunghaften Anstiege der Zentrifugalbeschleunigung erfahren. Somit ergibt sich eine deutliche Reduktion des Rucks, der auf Aufnahmeelement 21 und Transportgut wirkt.

### Bezugszeichenliste

- 10: Transportsystem
- 11: Linearmotor
- 13: erste Strecke
- 13a: gerader Streckenabschnitt
- 13b: gekrümmter Streckenabschnitt
- 15: zweite Strecke
- 15a: gerader Streckenabschnitt
- 15b: gekrümmter Streckenabschnitt
- 17: Transporteinheit
- 19: Transportelement
- 21: Aufnahmeelement
- 23: Rolle
- 25: Permanentmagnet
- 27: Abstandseinheit
- 29: Abstandshalter
- 29a: erster Kontaktabschnitt
- 29b: zweiter Kontaktabschnitt
- 31: Gleitlager
- 33: Vergleichsstrecke

- P: Kurvenmittelpunkt
- S₁: Streckenpunkt
- S₂: Streckenpunkt

## Patentansprüche

1. Transportsystem (10), insbesondere Multi-Carrier-System, umfassend mehrere Linearmotoren (11), die aneinandergereiht angeordnet sind und eine erste Strecke (13), welche gerade Streckenabschnitte (13a) und gekrümmte Streckenabschnitte (13b) aufweist, sowie eine sich von der ersten Strecke (13) zumindest teilweise unterscheidende zweite Strecke (15), welche zumindest gekrümmte Streckenabschnitte (15b) aufweist, definieren, zumindest eine Transporteinheit (17), die ein Transportelement (19), welches durch die Linearmotoren (11) in einer Bewegungsrichtung (x) entlang der ersten Strecke (13) bewegbar ist, und ein Aufnahmeelement (21) zum Aufnehmen eines zu transportierenden Transportguts aufweist, welches ausgebildet ist, mit dem Transportelement (19) in der Bewegungsrichtung (x) mitbewegt und zum Einstellen eines Abstands zwischen dem Transportelement (19) und dem Aufnahmeelement (21) in einer Querrichtung (y), die sich quer zu der Bewegungsrichtung (x) erstreckt, relativ zu dem Transportelement (19) bewegt zu werden, wobei sich die Bewegungsrichtung (x) und die Querrichtung (y) auf ein mitbewegtes Koordinatensystem des Transportelements (19) beziehen und die Zentrifugalkraft, die das Transportelement (19) in den gekrümmten Streckenabschnitten (13b) erfährt, in der Querrichtung (y) wirkt, und
eine Abstandseinheit (27) zum Einstellen des Abstands in der Querrichtung (y) zwischen dem Transportelement (19) und dem Aufnahmeelement (21) während der Bewegung des Transportelements (19), sodass das Aufnahmeelement (21) entlang und/oder entsprechend der zweiten Strecke (15) bewegt wird.

2. Transportsystem (10) nach Anspruch 1,
**dadurch gekennzeichnet, dass** gerade Streckenabschnitte (13a) der ersten Strecke (13) parallel zu geraden Streckenabschnitten (15a) der zweiten Strecke (15) verlaufen.

3. Transportsystem (10) nach Anspruch 1 oder 2,
**dadurch gekennzeichnet, dass** die zweite Strecke (15) zumindest einen Kurvenabschnitt (15b) aufweist, der einer Klothoide folgt.

4. Transportsystem (10) nach einem der vorstehenden Ansprüche,
**dadurch gekennzeichnet, dass** die erste Strecke (13) und die zweite Strecke (15) zueinander versetzt, insbesondere vertikal versetzt, sind.

5. Transportsystem (10) nach einem der vorstehenden Ansprüche,
**dadurch gekennzeichnet, dass** das Aufnahmeelement (21), insbesondere mittels eines Gleitlagers (31), quer zu der Bewegungsrichtung (x) beweglich an dem Transportelement (19) gelagert ist.

6. Transportsystem (10) nach einem der vorstehenden Ansprüche,
**dadurch gekennzeichnet, dass** die Abstandseinheit (27) einen Abstandshalter (29) aufweist, welcher einen ersten Kontaktabschnitt (29a) und einen zweiten Kontaktabschnitt (29b) aufweist, wobei zum Einstellen des Abstands der erste Kontaktabschnitt (29a) an dem Aufnahmeelement (21) befestigt ist und der zweite Kontaktabschnitt (29b) die zweite Strecke (15) kontaktiert.

7. Transportsystem (10) nach Anspruch 6,
**dadurch gekennzeichnet, dass** das Aufnahmeelement (21) in Richtung zu der zweiten Strecke (15) vorgespannt ist, insbesondere mittels einer Feder, oder dass der zweite Kontaktabschnitt (29b) an der zweiten Strecke (15) in der Querrichtung (y) unbeweglich geführt ist.

8. Transportsystem (10) nach einem der Ansprüche 1 bis 5,
**dadurch gekennzeichnet, dass** die Abstandseinheit (27) einen Motor aufweist, der ausgebildet ist, den Abstand in der Querrichtung (y) zwischen dem Transportelement (19) und dem Aufnahmeelement (21) entsprechend der Position des Transportelements (19) entlang der ersten Strecke (13) einzustellen.

9. Transportsystem (10) nach einem der Ansprüche 1 bis 5,
**dadurch gekennzeichnet, dass** das Aufnahmeelement (21) in Richtung zu der zweiten Strecke (15) vorgespannt ist, insbesondere mittels einer Feder.

10. Verfahren zum Betreiben eines Transportsystems (10) nach einem der vorstehenden Ansprüche, das die folgenden Schritte aufweist:
- Ansteuern der Linearmotoren (11), um das Transportelement (19) in der Bewegungsrichtung (x) entlang der ersten Strecke (13) zu bewegen,
- Einstellen des Abstands in der Querrichtung (y) zwischen dem Transportelement (19) und dem Aufnahmeelement (21) während der Bewegung des Transportelements (19) mittels der Abstandseinheit (27), sodass das Aufnahmeelement (21) entlang und/oder entsprechend der zweiten Strecke (15) bewegt wird.

## Claims

1. A transport system (10), in particular a multi-carrier system, comprising a plurality of linear motors (11) that are arranged in a row and that define a first path (13), which has straight path sections (13a) and curved path sections (13b), and a second path (15) which differs at least partly from the first path (13) and which at least has curved path sections (15b);
at least one transport unit (17) that has a transport element (19), which can be moved by the linear motors (11) in a direction of movement (x) along the first path (13), and a pick-up element (21) for picking up a transport item to be transported, which pick-up element (21) is configured to be moved along with the transport element (19) in the direction of movement (x) and to be moved relative to the transport element (19) in order to set a distance between the transport element (19) and the pick-up element (21) in a transverse direction (y) which extends transversely to the direction of movement (x), wherein the direction of movement (x) and the transverse direction (y) refer to a co-moving coordinate system of the transport element (19) and the centrifugal force which the transport element (19) experiences in the curved path sections (13b) acts in the transverse direction (y); and
a distance unit (27) for setting the distance in the transverse direction (y) between the transport element (19) and the pick-up element (21) during the movement of the transport element (19) so that the pick-up element (21) is moved along and/or in accordance with the second path (15).

2. A transport system (10) according to claim 1,
**characterized in that** straight path sections (13a) of the first path (13) extend in parallel with straight path sections (15a) of the second path (15).

3. A transport system (10) according to claim 1 or 2,
**characterized in that** the second path (15) has at least one curve section (15b) which follows a clothoid.

4. A transport system (10) according to any one of the preceding claims,
**characterized in that** the first path (13) and the second path (15) are offset from one another, in particular vertically offset.

5. A transport system (10) according to any one of the preceding claims,
**characterized in that** the pick-up element (21) is movably supported at the transport element (19) transversely to the direction of movement (x), in particular by means of a plain bearing (31).

6. A transport system (10) according to any one of the preceding claims,
**characterized in that** the distance unit (27) has a spacer (29) which has a first contact section (29a) and a second contact section (29b), with the first contact section (29a) being fastened to the pick-up element (21) and the second contact section (29b) contacting the second path (15) in order to set the distance.

7. A transport system (10) according to claim 6,
**characterized in that** the pick-up element (21) is preloaded in the direction of the second path (15), in particular by means of a spring, or **in that** the second contact section (29b) is immovably guided at the second path (15) in the transverse direction (y).

8. A transport system (10) according to any one of the claims 1 to 5,
**characterized in that** the distance unit (27) has a motor which is configured to set the distance in the transverse direction (y) between the transport element (19) and the pick-up element (21) in accordance with the position of the transport element (19) along the first path (13).

9. A transport system (10) according to any one of the claims 1 to 5,
**characterized in that** the pick-up element (21) is preloaded in the direction of the second path (15), in particular by means of a spring.

10. A method for operating a transport system (10) according to any one of the preceding claims that has the following steps:
- controlling the linear motors (11) to move the transport element (19) in the direction of movement (x) along the first path (13),
- setting the distance in the transverse direction (y) between the transport element (19) and the pick-up element (21) during the movement of the transport element (19) by means of the distance unit (27) so that the pick-up element (21) is moved along and/or in accordance with the second path (15).

## Revendications

1. Système de transport (10), en particulier système multi-chariots, comprenant :
plusieurs moteurs linéaires (11) agencés en juxtaposition et définissant un premier trajet (13) qui présente des sections de trajet droites (13a) et des sections de trajet courbes (13b), ainsi qu'un deuxième trajet (15) qui se distingue au moins partiellement du premier trajet (13) et qui présente au moins des sections de trajet courbes (15b),
au moins une unité de transport (17) qui comprend un élément de transport (19) susceptible d'être déplacé par les moteurs linéaires (11) dans une direction de déplacement (x) le long du premier trajet (13), et un élément de réception (21) destiné à recevoir un produit à transporter et conçu pour être déplacé conjointement avec l'élément de transport (19) dans la direction de déplacement (x) et pour être déplacé par rapport à l'élément de transport (19) dans une direction transversale (y), s'étendant transversalement à la direction de déplacement (x), afin de régler un espacement entre l'élément de transport (19) et l'élément de réception (21), sachant que la direction de déplacement (x) et la direction transversale (y) se rapportent à un système de coordonnées embarqué de l'élément de transport (19) et que la force centrifuge que subit l'élément de transport (19) dans les sections de trajet courbes (13b) agit dans la direction transversale (y), et
une unité d'espacement (27) destinée à régler l'espacement dans la direction transversale (y) entre l'élément de transport (19) et l'élément de réception (21) pendant le déplacement de l'élément de transport (19), de sorte que l'élément de réception (21) est déplacé le long de et/ou conformément au deuxième trajet (15).

2. Système de transport (10) selon la revendication 1,
**caractérisé en ce que** des sections de trajet droites (13a) du premier trajet (13) s'étendent parallèlement à des sections de trajet droites (15a) du deuxième trajet (15).

3. Système de transport (10) selon la revendication 1 ou 2,
**caractérisé en ce que** le deuxième trajet (15) présente au moins une section courbe (15b) qui suit une clothoïde.

4. Système de transport (10) selon l'une des revendications précédentes,
**caractérisé en ce que** le premier trajet (13) et le deuxième trajet (15) sont décalés l'un par rapport à l'autre, en particulier décalés verticalement.

5. Système de transport (10) selon l'une des revendications précédentes,
**caractérisé en ce que** l'élément de réception (21) est monté sur l'élément de transport (19), en particulier au moyen d'un palier lisse (31), de manière à pouvoir se déplacer transversalement à la direction de déplacement (x).

6. Système de transport (10) selon l'une des revendications précédentes,
**caractérisé en ce que** l'unité d'espacement (27) comprend un élément écarteur (29) qui comprend une première partie de contact (29a) et une deuxième partie de contact (29b), sachant que, pour régler l'espacement, la première partie de contact (29a) est fixée à l'élément de réception (21) et la deuxième partie de contact (29b) est en contact avec le deuxième trajet (15).

7. Système de transport (10) selon la revendication 6,
**caractérisé en ce que** l'élément de réception (21) est précontraint en direction du deuxième trajet (15), en particulier au moyen d'un ressort,
ou **en ce que** la deuxième partie de contact (29b) est guidée sur le deuxième trajet (15) de manière immobile dans la direction transversale (y).

8. Système de transport (10) selon l'une des revendications 1 à 5,
**caractérisé en ce que** l'unité d'espacement (27) comporte un moteur conçu pour régler l'espacement dans la direction transversale (y) entre l'élément de transport (19) et l'élément de réception (21) en fonction de la position de l'élément de transport (19) le long du premier trajet (13).

9. Système de transport (10) selon l'une des revendications 1 à 5,
**caractérisé en ce que** l'élément de réception (21) est précontraint en direction du deuxième trajet (15), en particulier au moyen d'un ressort.

10. Procédé d'exploitation d'un système de transport (10) selon l'une des revendications précédentes, comprenant les étapes suivantes consistant à :
- commander les moteurs linéaires (11) pour déplacer l'élément de transport (19) dans la direction de déplacement (x) le long du premier trajet (13),
- régler, au moyen de l'unité d'espacement (27), l'espacement dans la direction transversale (y) entre l'élément de transport (19) et l'élément de réception (21) pendant le déplacement de l'élément de transport (19), de sorte que l'élément de réception (21) est déplacé le long de et/ou conformément au deuxième trajet (15).
